# EUROPÄISCHE PATENTSCHRIFT

(11) **EP 2 596 318 B1**
(45) Veröffentlichungstag und Bekanntmachung des Hinweises auf die Patenterteilung: **12.11.2014**
(21) Anmeldenummer: 11745500.6
(22) Anmeldetag: 13.07.2011
(51) Int. Cl.: G01B 5/012, G01B 21/04, B23Q 3/155, F16L 37/00

(54) **ERMITTLUNG DER ANKOPPLUNG VON TEILEN AN EINER MASCHINE**
DETECTING THE COUPLING OF PARTS TO A MACHINE
DÉTERMINATION DE L'ACCOUPLEMENT DE PIÈCES À UNE MACHINE

(30) Priorität: 22.07.2010 DE 102010031976
(43) Veröffentlichungstag der Anmeldung: 29.05.2013
(73) Patentinhaber: Carl Zeiss Industrielle Messtechnik GmbH, 73447 Oberkochen (DE)
(72) Erfinder: ENGEL, Thomas, 73432 Aalen (DE)
(74) Vertreter: Brunotte, Joachim Wilhelm Eberhard
(86) Internationale Anmeldenummer: PCT/EP2011/061972
(87) Internationale Veröffentlichungsnummer: WO 2012/010483

(56) Entgegenhaltungen:
- WO-A1-87/01798
- DE-U1-202004 011 364
- US-A- 5 918 378
- US-A1- 2005 207 857

## Beschreibung

Die Erfindung betrifft ein Verfahren zum Ermitteln eines angekoppelten Zustandes und/oder eines abgekoppelten Zustandes eines ankoppelbaren Teils einer Maschine. Die Erfindung betrifft ferner eine Anordnung zum Ermitteln eines angekoppelten Zustandes und/oder eines abgekoppelten Zustandes eines ankoppelbaren Teils einer Maschine. Bei der Maschine handelt es sich insbesondere um ein Koordinatenmessgerät oder eine Werkzeugmaschine.

Bei Koordinatenmessgeräten werden häufig Teile angekoppelt, z.B. Taster zum mechanischen Antasten eines zu vermessenden Gegenstandes, Sensoren (etwa optische Sensoren zum berührungslosen Abtasten eines zu vermessenden Gegenstandes oder Sensoren, die zur Erzeugung von Sensorsignalen beim mechanischen Antasten eines Gegenstandes erzeugt werden, z.B. mittels eines Tasters, der wiederum an den Sensor angekoppelt ist) und mechanische Bauteile, wie z.B. Gelenke (z.B. so genannten Dreh-/ Schwenkgelenke, die zwei Drehachsen aufweisen). Die Erfindung betrifft insbesondere solche Kopplungen, bei denen die miteinander zu koppelnden Teile in vordefinierte Relativpositionen relativ zueinander zu bringen sind. Beispielsweise muss ein Taster eines Koordinatenmessgerätes sehr genau in vordefinierter Weise an das Koordinatenmessgerät angekoppelt werden, um die Messgenauigkeit zu gewährleisten. Andernfalls müsste der Taster jedes Mal wieder neu kalibriert werden, wenn er an das Koordinatenmessgerät angekoppelt worden ist. Aus der Koordinatenmesstechnik ist es bekannt, solche vordefinierten und reproduzierbar herzustellenden Relativpositionen durch entsprechende Formgestaltung der mechanischen Schnittstellen der zu koppelnden Teile zu gewährleisten. Bekannt sind insbesondere kugelförmige, zylinderförmige und zahnförmige Vorsprünge und Aussparungen an den mechanischen Schnittstellen. Z.B. bei einer so genannten Dreipunktlagerung werden die miteinander zu koppelnden Teile durch eine Bewegung in axialer Richtung aneinander angekoppelt, wobei an drei Punkten, die in der Regel um die Mittelachse der axialen Richtung herum verteilt sind, an einem Teil jeweils ein Zylinderpaar oder Kugelpaar angeordnet ist und wobei an dem anderen Teil ein entsprechender Vorsprung, z.B. ein zylinderförmiger Vorsprung oder kugelförmiger Vorsprung so angeordnet ist, dass er bei angekoppelten Teilen zwischen dem Zylinderpaar oder Kugelpaar des anderen Teils angeordnet ist. Ein anderes Beispiel sind Verzahnungen, die ebenfalls durch axiale Bewegung miteinander in Eingriff kommen. Dabei greifen bei hergestellter Ankopplung die Zähne des einen Teils in die Vertiefungen zwischen den Zähnen des anderen Teils ein. Ein bekanntes Ausführungsbeispiel ist die Hirth-Verzahnung, bei der beide Teile einen Zahnkranz gleichen Durchmessers aufweisen, der sich um die Mittelachse herumerstreckt, in deren Richtung beim Ankoppeln oder Abkoppeln eine lineare Bewegung zumindest eines der beiden Teile stattfindet.

Bei Koordinatenmessgeräten und Werkzeugmaschinen besteht häufig der Wunsch, sicher feststellen zu können, ob die Ankopplung vollständig in der vordefinierten Weise hergestellt ist. Z.B. ist es möglich, dass die vorspringenden Bereiche an dem einen Teil und die entsprechenden Aussparungen an dem anderen Teil nicht vollständig miteinander in Eingriff gelangt sind, weil die Teile verkantet sind. Bei Drehgelenken, die in unterschiedlichen Drehstellungen eingekoppelt werden können, ist es außerdem wünschenswert feststellen zu können, ob sich das Gelenk in dem eingekoppelten Zustand befindet (in dem die beiden Teile des Gelenks aneinander angekoppelt sind) oder in dem ausgekoppelten Zustand befindet (in dem die Teile nicht aneinander angekoppelt sind). Darüber hinaus ist es bei Drehgelenken mit mehreren möglichen Drehstellungen von Interesse, ob eine Drehstellung erreicht ist, in der die noch nicht miteinander gekoppelten Teile durch Linearbewegung in der axialen Richtung aneinander angekoppelt werden können. Z.B. bei der Hirth-Verzahnung ist dies nur dann möglich, wenn die Spitzen der Zähne den Vertiefungen zwischen den Zähnen des anderen Teils gegenüberstehen.

Eine Möglichkeit, den angekoppelten Zustand festzustellen, ist die Prüfung, ob ein Stromfluss eines elektrischen Stromes von dem einen Teil zu dem anderen Teil möglich ist. Hierzu werden an beiden Teilen zusätzliche elektrische Kontakte angebracht oder die im angekoppelten Zustand aneinanderstoßenden Oberflächenbereiche, die die erwähnten Vorsprünge und Vertiefungen bzw. Aussparungen bilden, sind als elektrisch leitende Oberflächen ausgestaltet und entsprechend elektrisch angeschlossen. Zusätzliche elektrische Kontakte haben den Nachteil, dass sie den reproduzierbar herzustellenden Kopplungszustand nicht eindeutig erkennen können, weil sie nicht Teil der mechanischen Lagerung sind. Wird die mechanische Lagerung selbst für die elektrische Kontaktierung genutzt, kann es ebenfalls zu Fehlmeldungen kommen, da der elektrische Kontakt unter Umständen auch bei einer verkanteten Kopplung hergestellt wird, die nicht der vordefinierten, erwünschten Relativposition der zu koppelnden Teile entspricht. Bei einer Dreipunktlagerung müssten daher zumindest zwei der drei vordefinierten Kontaktpunkte der mechanischen Lagerung jeweils mit der elektrischen Kontaktmessung versehen sein. Mit einer derartigen elektrischen Kontaktmessung kann aber keinesfalls festgestellt werden, in welcher Relativposition sich die beiden zu koppelnden Teile befinden, wenn der elektrische Kontakt noch nicht hergestellt ist, d.h. wenn die Teile noch nicht in mechanischem Kontakt zueinander sind. Außerdem ist der Aufwand für zusätzliche elektrische Kontakte oder elektrische Anschlüsse an den zu koppelnden Teilen nicht zu vernachlässigen. Insbesondere bei kleinen Bauteilen und bei hochpräzisen Bauteilen können zusätzliche elektrische Verbindungen und Anschlüsse unerwünscht sein.

DE 20 2004 011 364 U1 beschreibt eine Vorrichtung mit abnehmbarem Messkopf zum Vermessen eines Werkstücks. Die Vorrichtung weist einen Aufnahmebereich zum Ankoppeln des Messkopfs auf. Im Aufnahmebereich sind n Sensoren in fest vorgegebenen Positionen angeordnet, wobei n eine ganze Zahl größer gleich 2 ist. Der abnehmbare Messkopf weist m Gegenelemente auf, wobei m eine ganze Zahl größer gleich 1 ist, die mit den n Sensoren in Wechselwirkung stehen, wenn der Messkopf im Aufnahmebereich angekoppelt ist Es ist eine Kodierung des abnehmbaren Messkopfes vorgebbar, indem die Position der m Gegenelemente eingestellt wird. Ein Verzahnungsmessgerät umfasst mindestens einen abnehmbaren Messkopf. Ein Magnetfeldsensor (Näherungsschalter) kann als Sensor und ein Magnet als Gegenelement eingesetzt werden.

WO 87/01798 A1 beschreibt eine Werkzeug-Wechselvorrichtung zum Wechseln von Werkzeugen an einem Koordinatenmessgerät. Das Koordinatenmessgerät hat z.B. einen Kopf, der relativ zu einem Tisch bewegbar ist, an dem eine Mehrzahl verschiedener Werkzeuge angeordnet ist. Der Kopf ist ausgestaltet, mit irgendeinem der Werkzeuge verbunden zu werden. Jedes der Werkzeuge hat einen elektrischen Schaltkreis, der mit einer Mehrzahl von Kontakten verbunden ist, die mit entsprechenden Kontakten an dem Kopf zusammenwirken, um den Schaltkreis des Werkzeugs mit einer Signalaufbereitungseinheit an dem Kopf zu verbinden. Jedes Werkzeug kann ein Element tragen, das einen einzigartigen, magnetisch erkennbaren Code aufweist, der von einem entsprechenden Sensor an dem Kopf gelesen wird. Ein Mikroprozessor entscheidet, ob das korrekte Werkzeug aufgenommen worden ist, indem er einen erwarteten Wert mit einem tatsächlich erhaltenen Wert vergleicht.

US 2005/207857 A1 beschreibt eine Werkzeug-Schalt-Einrichtung für ein Koordinatenmessgerät, wobei das Werkzeug an einem Werkzeugträger befestigt wird und mittels Elementen gehalten wird, die eine axiale Kraft ausüben. Die Verbindung und Ablösung eines Adapters und des Werkzeugträgers werden durch einen Aktuator bestimmt.

US 5,918,378 beschreibt ein Koordinatenmessgerät, das einen modularen Sensor über einen Adapter an seinem beweglichen Arm trägt. Z.B. sind ein Haltemodul und ein Taststiftmodul vorgesehen. Wenn diese beiden Module außer Eingriff gebracht werden, wird ein Detektionskreis von der entsprechenden Schnittstelle, die Kugeln und entsprechende Zylinder aufweist, unterbrochen.

Es ist eine Aufgabe der vorliegenden Erfindung, ein Verfahren und eine Anordnung der eingangs genannten Art anzugeben, die eine Ermittlung des Kopplungszustandes der beiden miteinander zu koppelnden Teile ermöglichen. Insbesondere soll es möglich sein, den nicht gekoppelten Zustand sicher festzustellen. Optional soll es auch möglich sein, im nicht gekoppelten Zustand der Teile eine vordefinierte Relativposition der Teile festzustellen.

Die beigefügten Patentansprüche definieren den Schutzumfang.

Gemäß einer Grundidee der vorliegenden Erfindung wird ein magnetoresistiver Sensor verwendet. Der Sensor wird vorzugsweise derart relativ zu den miteinander zu koppelnden Teilen positioniert und ausgerichtet, dass durch Sensorsignale des Sensors eine vordefinierte Relativposition der Teile und/oder eine Drehstellung der Teile bezüglich einer Drehachse erkennbar ist. Alternativ oder zusätzlich kann der Sensor derart relativ zu den Teilen positioniert und ausgerichtet sein sowie ausgestaltet sein, dass er Relativpositionen der Teile und/oder Drehstellungen der Teile bezüglich der Drehachse in einem Bereich von Relativpositionen detektiert und entsprechende Sensorsignale ausgibt. Die Positionierung und Ausrichtung des Sensors relativ zu den miteinander zu koppelnden Teilen kann insbesondere dadurch realisiert werden, dass der Sensor an einem der Teile befestigt wird oder das Teil und der Sensor über eine Befestigung miteinander verbunden werden. In diesem Fall ändert sich die Position und Ausrichtung des Sensors relativ zu dem Teil nicht. Lediglich das andere Teil führt zu verschiedenen Sensorsignalen, je nachdem in welcher Relativposition und/oder Drehstellung es sich bezüglich des anderen Teils befindet. Anders formuliert verändert das Teil, das nicht mit dem Sensor fest verbunden ist, das von dem Sensor detektierte Magnetfeld.

Bei den miteinander zu koppelnden Teilen kann es sich insbesondere um die oben erwähnten Teile handeln, z.B. einen Taster und den Arm oder den Sensor des Koordinatenmessgerätes, an dem der Taster anzukoppeln ist.

Insbesondere kann das Signal des Sensors eindeutig der Magnetfeldstärke des Magnetfeldes entsprechen, das am Ort des Sensors herrscht. Alternativ kann der Sensor jedoch auch abhängig von der Richtung der Magnetfeldlinien oder abhängig von dem Gradienten eines inhomogenen am Ort des Sensors herrschenden Magnetfeldes Sensorsignale erzeugen.

Gemäß einer besonders bevorzugten Ausführungsform detektiert der magnetoresistive Sensor sowohl eine Relativposition der beiden miteinander zu koppelnden Teile bezüglich einer axialen Richtung, in der die Teile relativ zueinander geradlinig bewegt werden, um die Teile zu koppeln oder voneinander zu trennen, als auch eine relative Drehstellung der Teile bezüglich einer Drehachse, die in Richtung der axialen Richtung orientiert ist. Wenn im Folgenden von der Drehstellung der beiden Teile bezüglich einer Drehachse die Rede ist, dann handelt es sich um eine Drehstellung relativ zueinander. Wird z.B. sowohl das eine Teil als auch das andere Teil um 180° um die Drehachse gedreht, ist wieder dieselbe Drehstellung erreicht. In der Praxis kommt es, z.B. bei Drehgelenken, aber häufig vor, dass lediglich ein Teil gedreht wird, während das andere Teil bezüglich der Umgebung festgehalten wird, bzw. nicht gedreht wird. Auch zum Ankoppeln oder Abkoppeln wird in der Praxis häufig lediglich eines der Teile in der axialen Richtung bewegt. Falls der Sensor relativ zu einem der beiden Teile fest positioniert und ausgerichtet ist, kommt es für das von dem Sensor erzeugte Sensorsignal jedoch nur auf die Relativposition und die relative Drehstellung an.

Die erfindungsgemäße Verwendung eines magnetoresistiven Sensors macht es möglich, sowohl die axiale Relativposition der beiden zu koppelnden Teile als auch die relative Drehstellung zu detektieren. Damit kann besonders zuverlässig erkannt werden, ob sich die Teile tatsächlich in dem gewünschten angekoppelten Zustand befinden, d.h. miteinander gekoppelt sind. Wenn die Teile nicht miteinander gekoppelt sind, kann dies aus den Sensorsignalen ermittelt werden und kann durch Detektierung bzw. Auswertung der relativen Drehstellung festgestellt werden, ob durch Ausführung einer linearen, geradlinigen Bewegung der Teile aufeinander zu in der axialen Richtung eine gewünschte, vordefinierte Kopplung der Teile erreicht werden kann. Z.B. kann bei einer Dreipunktlagerung festgestellt werden, ob die Dreipunktlagerung durch die Linearbewegung erreicht wird. Kann die Dreipunktlagerung verschiedene Zustände haben, d.h. können die Teile bei verschiedenen relativen Drehstellungen durch die Dreipunktlagerung miteinander gekoppelt werden, kann durch Auswertung der Sensorsignale zuverlässig festgestellt werden, welcher Kopplungszustand erreicht wird, wenn die Teile durch Linearbewegung miteinander gekoppelt werden. Entsprechendes gilt für Verzahnungen, z.B. eine Hirth-Verzahnung. In diesem Fall kann insbesondere durch Auswertung der Sensorsignale des Sensors festgestellt werden, ob die Hirth-Verzahnung durch Linearbewegung ohne Beschädigung der Verzahnung und/oder ohne die Erzeugung unerwünschter Zwangskräfte hergestellt werden kann. Solche Zwangskräfte würden z.B. dann auftreten, wenn die Zahnspitzen des einen Zahnkranzes nicht den tiefsten Stellen zwischen den Zähnen des anderen Zahnkranzes gegenüberstehen. Eine Beschädigung könnte auftreten, wenn die Zahnspitzen der beiden Zahnkränze einander genau gegenüberstehen.

Unabhängig davon, um welche Art von mechanischen Schnittstellen es sich handelt, z.B. um eine Dreipunktlagerung oder um eine Hirth-Verzahnung, kann die momentane relative Drehstellung der beiden miteinander zu koppelnden Teile durch Auswertung des zeitlichen Verlaufs der kontinuierlich oder quasikontinuierlich von dem Sensor erzeugten Sensorsignale stattfinden, die während einer Drehbewegung der Teile relativ zueinander um die Drehachse erzeugt werden. Z.B. bei einer Hirth-Verzahnung können die Sensorsignale, die der Sensor erzeugt, gleich sein, wenn eine Drehung eines der Zahnkränze um eine Zahnperiode stattgefunden hat, d.h. um einen Drehwinkel, der dem Zahnabstand entspricht. Führt einer der Zahnkränze eine solche Drehbewegung um eine Zahnperiode aus, führt auch das Sensorsignal eine periodische Änderung aus, d.h. verändert sich und erreicht wieder denselben Signalzustand wie zu Beginn der Periode. Eine entsprechende Auswertungseinrichtung ist daher vorzugsweise so ausgestaltet, dass sie derartige periodische Änderungen des Sensorsignals feststellen kann. Soll beispielsweise eine Drehung um 1,5 Zahnperioden stattfinden, detektiert die Auswertungseinrichtung nach Durchlaufen einer Zahnperiode die Vollendung der Periode und detektiert anschließend, dass eine weitere halbe Periode durchlaufen wurde. Dabei kann die Auswertungseinrichtung ausgestaltet sein, lediglich die korrekte Ausführung der Drehbewegung zu überprüfen, die Auswertungseinrichtung kann jedoch auch mit einer Steuereinrichtung gekoppelt sein, die die Drehbewegung (und/oder in einem anderen Ausführungsbeispiel die Bewegung in axialer Richtung) steuert, und die Steuereinrichtung kann die Drehbewegung (und/oder die Bewegung in axialer Richtung) abhängig von den Detektionsergebnissen der Auswertungseinrichtung steuern, insbesondere die Bewegung beenden. Z.B. bei der Drehung um 1,5 Zahnperioden kann die Steuereinrichtung die Drehbewegung beenden, sobald sie von der Auswertungseinrichtung ein Signal erhält, das anzeigt, dass die Drehbewegung um 1,5 Zahnperioden vollendet ist. Die vorgenannten Ausführungsbeispiele für eine Drehbewegung um 1,5 Zahnperioden gelten entsprechend für Drehbewegungen um ein anderes Vielfaches oder nicht ganzes Vielfaches von Zahnperioden. Z.B. könnte bei einer Hirth-Verzahnung mit 30 Zähnen pro Zahnkranz eine halbe Umdrehung um die Drehachse gewünscht sein. In diesem Fall würde die Auswertungseinrichtung das Durchlaufen des Sensorsignals von 15 Perioden detektieren. Wenn die Auswertungseinrichtung die Steuereinrichtung ansteuert, kann sie entweder die Information über die durchlaufenen Perioden (z.B. 1,5 oder 3,2) an die Steuereinrichtung ausgeben oder ein Stoppsignal ausgeben, wenn die gewünschte Anzahl von Perioden oder nicht ganzzahligen Vielfachen einer Periode durchlaufen sind.

Die erfindungsgemäße Verwendung eines magnetoresistiven Sensors kann mit einem weiteren Sensor kombiniert werden. Dabei kann es sich um einen weiteren magnetoresistiven Sensor handeln. Auf diese Weise können z.B. redundante Signale erzeugt werden, die die Zuverlässigkeit der Erkennung noch weiter erhöhen. Alternativ oder zusätzlich kann die Erkennung eines angekoppelten Zustandes der Teile und/oder eines abgekoppelten Zustandes der Teile und/oder einer relativen Drehstellung mit einem Hall-Sensor, der den Hall-Effekt nutzt, kombiniert werden. Noch eine weitere zusätzliche oder alternative Möglichkeit der Detektion der angekoppelten oder abgekoppelten Zustände ist die Verwendung einer Lichtschranke. Es ist auch möglich, statt einem magnetoresistiven Sensor einen Hall-Sensor einzusetzen. Auch bei einem Hall-Sensor wird festgestellt, wie sich das Magnetfeld am Ort des Sensors ändert. Insofern können magnetoresistive Sensoren und Hall-Sensoren unter dem gemeinsamen Oberbegriff "magnetische Sensoren" zusammengefasst werden. Magnetoresistive Sensoren liefern jedoch für den hier beabsichtigten Anwendungszweck Signale mit größerem Signal-/Rauschverhältnis. Ferner lassen sich magnetoresistive Sensoren besonders gut miniaturisieren, wobei dennoch ein Signal mit sehr gutem Signal-/Rauschverhältnis erzeugt wird. Dagegen führt die Miniaturisierung von Hall-Sensoren zu deutlich schlechteren Signalqualitäten.

Insbesondere wird ein Verfahren zum Ermitteln eines angekoppelten Zustandes und/oder eines abgekoppelten Zustandes eines ankoppelbaren Teils einer Maschine vorgeschlagen, insbesondere eines Koordinatenmessgerätes oder einer Werkzeugmaschine, wobei das ankoppelbare Teil zur Herstellung des angekoppelten Zustandes in einer axialen Richtung auf einen Kontaktbereich der Maschine zu bewegbar ist und zur Herstellung des abgekoppelten Zustandes in der axialen Richtung von dem Kontaktbereich weg bewegbar ist, wobei ein magnetoresistiver Sensor dazu verwendet wird, ein Sensorsignal zu erzeugen, das von einer axialen Position des ankoppelbaren Teils abhängig ist, das erzeugte Sensorsignal ausgewertet wird und daraus ermittelt wird, ob das ankoppelbare Teil an dem Kontaktbereich der Maschine angekoppelt ist und/oder ob das ankoppelbare Teil von dem Kontaktbereich abgekoppelt ist.

Ferner wird eine Anordnung zum Ermitteln eines angekoppelten Zustandes und/oder eines abgekoppelten Zustandes eines ankoppelbaren Teils einer Maschine vorgeschlagen, insbesondere eines Koordinatenmessgerätes oder einer Werkzeugmaschine, wobei die Anordnung das ankoppelbare, erste Teil und ein zweites Teil aufweist, wobei das zweite Teil einen Kontaktbereich der Maschine zum Ankoppeln des ersten Teils aufweist, wobei das ankoppelbare Teil zur Herstellung des angekoppelten Zustandes in einer axialen Richtung auf den Kontaktbereich zu bewegbar ist und zur Herstellung des abgekoppelten Zustandes in der axialen Richtung von dem Kontaktbereich weg bewegbar ist, wobei die Anordnung einen magnetoresistiver Sensor aufweist, der derart ausgestaltet und positioniert ist, dass er ein Sensorsignal erzeugt, das von einer axialen Position des ersten Teils abhängig ist, wobei die Anordnung eine Auswertungseinrichtung aufweist, die ausgestaltet ist, das erzeugte Sensorsignal auszuwerten und daraus zu ermitteln, ob das ankoppelbare Teil an dem Kontaktbereich der Maschine angekoppelt ist und/oder ob das ankoppelbare Teil von dem Kontaktbereich beabstandet ist.

Zum Umfang der Erfindung gehört ferner eine Maschine mit der Anordnung, insbesondere ein Koordinatenmessgerät.

Unter dem Kontaktbereich der Maschine wird insbesondere ein Oberflächenbereich verstanden, mit dem das ankoppelbare erste Teil im angekoppelten Zustand in mechanischem Kontakt ist. Dieser Kontaktbereich ist in der Regel nicht vollflächig kontaktiert. Vielmehr ist z.B. bei einer Dreipunktlagerung lediglich an drei Punkten oder Punktepaaren Kontakt zwischen den beiden angekoppelten Teilen. Im Fall einer Hirth-Verzahnung sind in der Regel viele der Flanken der Zähne in mechanischem Kontakt mit den Flanken des Zahnkranzes des anderen Teils. In vielen Fällen befinden sich die Oberflächen, an denen sich die miteinander gekoppelten Teile mechanisch kontaktieren, im Wesentlichen in einer Ebene oder in einem flachen, durch Ebenen begrenzten scheibenartigen Bereich. Die axiale Richtung, in die die miteinander zu koppelnden Teile beim Ankoppeln oder Abkoppeln geradlinig bewegt werden, verläuft senkrecht oder ungefähr senkrecht zu der Ebene oder den Ebenen des scheibenartigen Bereichs. Im Fall einer Dreipunktlagerung liegen die drei Punkte (bzw. im Fall von Zylinder- oder Kugelpaaren Punktepaare) im Wesentlichen in einer solchen Ebene. Im Fall einer Hirth-Verzahnung liegen die Flanken, an denen sich die Zähne der verschiedenen Teile berühren, in einem scheibenartigen Bereich der genannten Art, wobei die ebenen Begrenzungsflächen dieses scheibenartigen Bereichs lediglich gedachte Flächen sind, die in diesem Fall nicht entlang von Berührungsflächen verlaufen.

Das Sensorsignal des magnetoresistiven Sensors ist von der axialen Position des ankoppelbaren Teils abhängig, d-h- bei einer anderen axialen Position wird ein anderes Sensorsignal erzeugt. Dies gilt zumindest für einen Bereich von axialen Positionen. Abhängig von der Anordnung und Ausrichtung des magnetoresistiven Sensors ist es aber nicht völlig ausgeschlossen, dass auch verschiedene axiale Positionen das gleiche Sensorsignal erzeugen. In diesem Fall kann aber durch Auswertung des zeitlichen Verlaufs der erzeugten Sensorsignale während einer axialen Bewegung des ankoppelbaren Teils zuverlässig erkannt werden, in welcher axialen Position sich das Teil befindet. Hierzu kann, ebenso wie bei der oben beschriebenen Auswertung des zeitlichen Signalverlaufs bei Drehungen, Information darüber vorhanden sein (beispielsweise entsprechende digitale Daten gespeichert sein), wie sich das Sensorsignal während einer axialen Bewegung bzw. Drehbewegung verändert. Durch Vergleich mit der bekannten Information kann insbesondere die momentane axiale Position oder relative Drehstellung der Teile ermittelt werden. Unter der axialen Position ist die Position in der axialen Richtung zu verstehen, in die das ankoppelbare Teil beim Ankoppeln oder Abkoppeln bewegt wird. Wenn von der Bewegung des ankoppelbaren Teils die Rede ist, so schließt dies den Fall einer Relativbewegung mit ein, bei der beide Teile bewegt werden.

Wie oben erwähnt, wird insbesondere ermittelt, ob das ankoppelbare Teil an dem Kontaktbereich der Maschine angekoppelt ist und/oder ob das ankoppelbare Teil von dem Wie oben erwähnt, wird insbesondere ermittelt, ob das ankoppelbare Teil an dem Kontaktbereich der Maschine angekoppelt ist und/oder ob das ankoppelbare Teil von dem Kontaktbereich beabstandet ist, d.h. abgekoppelt ist. Die Ermittlung, dass das ankoppelbare Teil von dem Kontaktbereich beabstandet ist, schließt auch den Fall mit ein, dass die Relativposition der beiden miteinander zu koppelnden oder abzukoppelnden Teile aus den Sensorsignalen ermittelt wird und nicht nur festgestellt wird, dass das Teil abgekoppelt ist.

Die Verwendung zumindest eines magnetoresistiven Sensors hat den Vorteil, dass keine elektrischen Kontakte zwischen den zu koppelnden Teilen erforderlich sind. Magnetoresistive Sensoren sind in sehr kleiner Bauweise, z.B. als integrierter Schaltkreis, erhältlich und können daher auf einfache Weise und ohne wesentliche Beeinträchtigung der Konstruktion der Kopplung an einem der Teile befestigt werden, z.B. festgeklebt werden.

Zwar haben insbesondere miteinander zu koppelnde Teile, die aus magnetischem oder magnetisierbarem Material (z.B. eisenhaltigem Metall) gefertigt sind, besonders deutlichen Einfluss auf das am Ort des Sensors herrschende Magnetfeld, jedoch muss es sich bei dem Material der Teile nicht um Metall handeln oder um anderes magnetisierbares oder magnetisches Material handeln. Vielmehr verändern auch andere Materialien aufgrund ihrer magnetischen Permeabilität Magnetfelder. Die Nutzung des zumindest einen magnetoresistiven Sensors ist daher nicht auf magnetische oder magnetisierbare Materialien für die zu koppelnden Teile beschränkt.

Wie bereits erwähnt, ist es von besonderem Vorteil, einen magnetoresistiven Sensor einzusetzen, wenn das erste und das zweite miteinander zu koppelnde Teil relativ zueinander um die axiale Richtung drehbar sind. Bei dieser Betrachtung ist die der axialen Richtung entsprechende Achse die Drehachse. Dies ist z.B. bei ein- und auskoppelbaren Drehgelenken der Fall. In der Ausführungsform hat, wie oben bereits erwähnt, zumindest ein Teil (das erste und/oder das zweite Teil) zumindest einen vorspringenden Bereich, der im angekoppelten Zustand in eine entsprechende Aufnahme des anderen Teils eingreift. Z.B. handelt es sich bei dem vorspringenden Teil um einen kugelförmigen Oberflächenbereich, der im angekoppelten Zustand zwischen zwei parallelen zylinderförmigen Bereichen des anderen Teils angeordnet ist, so dass im Wesentlichen zwei Punkte der Kugel in Kontakt mit dem anderen Teil sind, und zwar jeweils ein Punkt mit jedem der Zylinder. Im Fall der Hirth-Verzahnung handelt es sich bei den vorspringenden Bereichen um die Zähne der Zahnkränze. In dieser bevorzugten Ausführungsform wird der magnetoresistive Sensor nicht nur zur Ermittlung der axialen Position des ankoppelbaren Teils verwendet, sondern auch dazu verwendet, ein Sensorsignal zu erzeugen, das von der relativen Drehstellung des ersten und zweiten Teils abhängig ist. Das erzeugte Sensorsignal kann daher ausgewertet werden und daraus können Informationen über die Drehstellung gewonnen werden. Auf Beispiele wurde bereits eingegangen.

Insbesondere kann durch Auswertung des erzeugten Sensorsignals ermittelt werden, ob sich das erste und das zweite Teil relativ zueinander in einer vorgegebenen Drehstellung befinden, die es erlaubt, durch Bewegung in der axialen Richtung das erste Teil an das zweite anzukoppeln.

Bei der Anordnung ist eine entsprechende Auswertungseinrichtung vorhanden, die ausgestaltet ist, das erzeugte Sensorsignal auszuwerten, vorzugsweise optional auch den zeitlichen Verlauf des erzeugten Sensorsignals auszuwerten.

Der Begriff magnetoresistiver (kurz: MR) Sensor ist ein Sammelbegriff für Sensoren, bei denen sich ein elektrischer Widerstand einer elektrischen Schaltung des Sensors unter dem Einfluss eines Magnetfeldes ändert. Dabei können verschiedene physikalische Wirkungsweisen zu der Widerstandsänderung führen. Je nach Ausgestaltung des MR-Sensors können z. B. Magnetfeld-Winkel, Magnetfeld-Stärken oder Magnetfeld-Gradienten erfasst werden. Eine physikalische Wirkungsweise ist z. B. der Anisotrope MR-Effekt (kurz: AMR), der in ferromagnetischen Materialien auftritt, deren spezifischer Widerstand sich mit dem Winkel zwischen Magnetfeldrichtung und Stromrichtung ändert. Eine andere physikalische Wirkungsweise ist der Tunnel-MR-Effekt, gemäß dem sich der Tunnelwiderstand zwischen zwei ferromagnetischen Schichten in Abhängigkeit des Winkels der Magnetisierung der beiden Lagen ändert. Gemäß noch einer anderen physikalischen Wirkungsweise, dem Giant-MR (GMR)-Effekt ändert sich der elektrische Widerstand von zwei dünnen ferromagnetischen Schichten, die durch eine dünne nicht magnetische Schicht getrennt sind, in Abhängigkeit vom Winkel der Magnetisierung in den beiden ferromagnetischen Schichten zueinander und liefert Widerstandsänderungen bis zu 50 %. Bei einer antiparallelen Magnetisierung der dünnen ferromagnetischen Schichten ist der elektrische Widerstand am höchsten. Die Widerstandsänderung ist dabei nicht abhängig von der Stromrichtung. Durch eine Stapelung von mehreren Schichten mit unterschiedlichen Eigenschaften und Magnetisierungen werden die Kennlinien von GMR-Sensoren durch ihre Konstruktion bestimmt. Dies erlaubt eine gezielte Anpassung der Kennlinien an die Anforderungen einer Messapplikation. Noch eine andere physikalische Wirkungsweise ist der Colossal-MR (CMR)-Effekt. Dieser Effekt tritt bei Mangan-basierten Oxiden auf, die in Abhängigkeit von einem Magnetfeld ihren elektrischen Widerstand ändern.

Realisiert werden können MR-Sensoren als elektrische Schaltungen in Dünnschichttechnologie, z. B. Schaltungen auf einer Platine. Die Schaltung kann jedoch prinzipiell auch auf andere Weise realisiert werden. Es können z. B. alternativ oder zusätzlich auch mikroelektronische integrierte Schaltkreise als elektrische Schaltung des Sensors eingesetzt werden. Neben der elektrischen Schaltung weisen viele MR-Sensoren außerdem einen oder mehrere Permanentmagneten auf. Die relative Position und Ausrichtung der elektrischen Schaltung einerseits und des zumindest einen Permanentmagneten andererseits sind dabei entweder fest vorgegeben oder einstellbar. Das Sensorprinzip beruht in diesem Fall darauf, dass externe Einflüsse das von dem zumindest einen Permanentmagneten erzeugte magnetische Feld verändern. Dies führt zu einem veränderten magnetischen Feld im Bereich der elektrischen Schaltung, die von der elektrischen Schaltung detektiert wird, d.h. die elektrische Schaltung erzeugt ein entsprechendes Sensorsignal. Anstelle eines Permanentmagneten kann auch ein Elektromagnet eingesetzt werden. In einer konkreten Sensor-Anordnung ist es jedoch alternativ möglich, dass der zumindest eine Magnet an einem Gegenstand befestigt ist und/oder dieser Gegenstand selbst magnetisch ist und/oder dass sich die Anordnung in einem externen Magnetfeld befindet. Der MR-Sensor muss daher nicht zwangsläufig einen Magneten aufweisen.

Allgemein gilt, dass der MR-Effekt die Erfassung von schwachen Magnetfeldern ermöglicht und dabei ein Signal mit einem sehr guten Signal-Rauschen-Verhältnis liefert. Bevorzugt werden für die vorliegende Erfindung AMR- und/oder GMR-Sensoren, die z. B. von Sensitec GmbH, Georg-Ohm-Str. 11, 35633 Lahnau - Waldgirmes, Deutschland angeboten werden. Auch TMR-Sensoren können für die Erfindung genutzt werden.

Ausführungsbeispiele der Erfindung werden nun unter Bezugnahme auf die beigefügte Zeichnung beschrieben. Die einzelnen Figuren der Zeichnung zeigen:
- Fig. 1: ein Koordinatenmessgerät in Portalbauweise mit einem Sensor und einem daran angekoppelten Taster,
- Fig. 2: ein motorisch betriebenes Drehgelenk in einem axialen Längsschnitt,
- Fig. 3: das Drehgelenk von Fig. 2, wobei ein axial bewegliches Teil sich in einer anderen axialen Position befindet,
- Fig. 4: einen Querschnitt entlang der Linie IV - IV in Fig. 3 durch einen zentralen Bereich des in Fig. 3 dargestellten Drehgelenks, wobei zwei miteinander koppelbare Teile in dem angekoppelten Zustand dargestellt sind,
- Fig. 5: einen Teil einer Verzahnung eines ersten und eines zweiten Teils, wobei ein magnetoresistiver Sensor im Bereich der Verzahnung angeordnet ist,
- Fig. 6: eine Seitenansicht auf die in Fig. 5 dargestellte Anordnung, wobei die Blickrichtung in Fig. 6 senkrecht zu der Blickrichtung in Fig. 5 ist,
- Fig. 7: die in Fig. 5 und Fig. 6 dargestellte Verzahnung in einer anderen Relativposition der beiden koppelbaren Teile,
- Fig. 8: die Verzahnung aus den Figuren 5 bis 7 in noch einer weiteren Relativposition der Teile,
- Fig. 9: einen Zahnkranz einer Hirth-Verzahnung,
- Fig. 10: schematisch zwei über eine Verzahnung miteinander koppelbare Teile und eine Anordnung zum Ermitteln der Relativposition der beiden Teile und zum Steuern der Bewegung eines der beiden Teile abhängig von Sensorsignalen eines magnetoresistiven Sensors,
- Fig. 11: schematisch die zwei in Fig. 10 dargestellten miteinander koppelbaren Teile und eine Ausgestaltung eines magnetoresistiven Sensors und eines Magneten, wobei der Sensor auf Höhe der axialen Position angeordnet ist, die im gekoppelten Zustand der beiden Teile in einer Mittelebene der Kopplung liegt, und
- Fig. 12: ein Flussdiagramm zur Darstellung von Verfahrensschritten einer bevorzugten Ausführungsform des Verfahrens zum Ermitteln eines Kopplungszustandes zweier koppelbarer Teile.

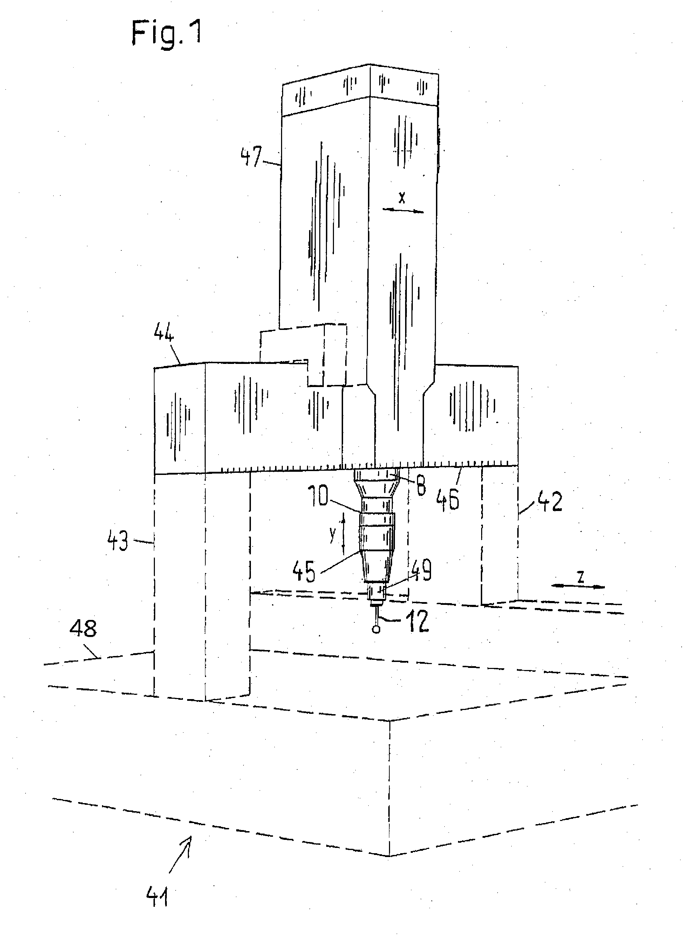

Das in Fig. 1 dargestellte Koordinatenmessgerät 41 in Portalbauweise ist ein Beispiel für eine Maschine, an der Teile ankoppelbar und abkoppelbar sind. Das Koordinatenmessgerät 41 weist einen Messtisch 48 auf, auf dem zwei Stützen 42, 43 des Portals in z-Richtung beweglich angeordnet sind. Auf den Stützen 42, 43 liegt ein Querträger 44 auf, relativ zu dem ein Schlitten 47 in x-Richtung verfahrbar ist, wobei die z-Richtung und die x-Richtung horizontal ausgerichtet sind und senkrecht zueinander stehen. Am unteren Rand des Querträgers 44 ist eine Skalierung 46 erkennbar, mittels der die Position des Schlittens 47 in x-Richtung ermittelbar ist. Ferner ist relativ zu dem Schlitten 47 eine vertikal, in γ-Richtung verfahrbare Anordnung erkennbar. Diese Anordnung weist einen Träger 8 auf, an dem über eine Kopplungseinrichtung 10 ein Sensor 45 auswechselbar befestigt ist. Am unteren Ende des Sensors 45 ist ferner eine Aufnahme 49 zum auswechselbaren Ankoppeln von Taststiften erkennbar. Im dargestellten Fall ist ein Taststift 12 über die Aufnahme 49 an dem Sensor 45 angekoppelt.

Der Kopplungszustand, insbesondere der in korrekter, vordefinierter Weise hergestellte angekoppelte Zustand und der abgekoppelte Zustand, kann mit einem magnetoresistiven Sensor festgestellt werden. Anhand der folgenden Figuren wird auf ein anderes Ausführungsbeispiel von zu koppelnden Teilen eingegangen. Das dabei beschriebene Prinzip der Verwendung eines magnetoresisitven Sensors kann jedoch auch auf die Kopplungen des Sensors 45 an dem Träger 8 und des Taststiftes 12 an dem Sensor 45 übertragen werden.

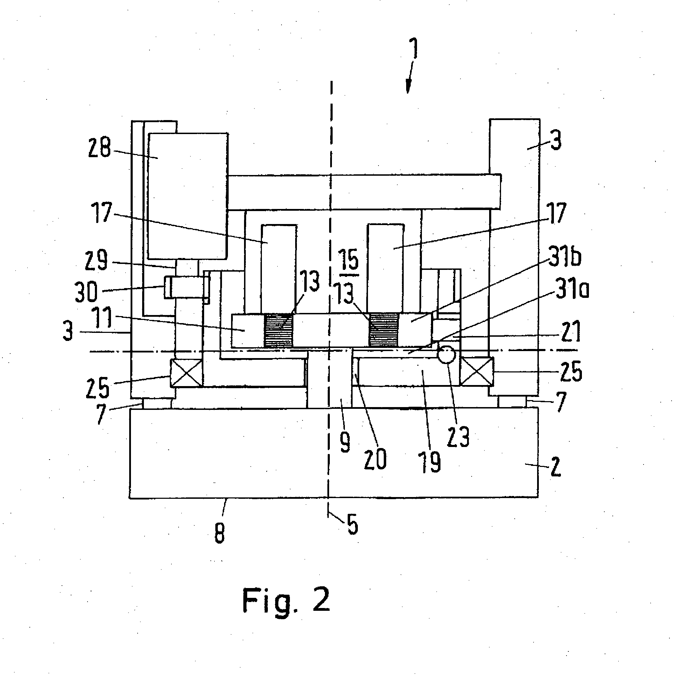

Fig. 2 zeigt einen axialen Längsschnitt durch ein motorisch betriebenes Drehgelenk, das z.B. an den Träger 8 (Fig.1) befestigt sein kann. Ein erstes Teil 2 ist um eine vertikal in Fig. 2 dargestellte Drehachse 5 drehbar gelagert. In dem in Fig. 2 dargestellten Zustand ist das Teil 2 jedoch nicht drehbar, weil es über eine Verzahnung 7 mit einem zweiten Teil 3 verzahnt und somit gekoppelt ist. Bei der Verzahnung 7 kann es sich insbesondere um eine Hirth-Verzahnung handeln. Auf ein Beispiel für eine Hirth-Verzahnung sowie auf Kopplungszustände einer Verzahnung wird noch näher eingegangen. Die dabei beschriebene Verwendung eines magnetoresistiven Sensors kann auch bei der in Fig. 2 dargestellten Verzahnung 7 stattfinden.

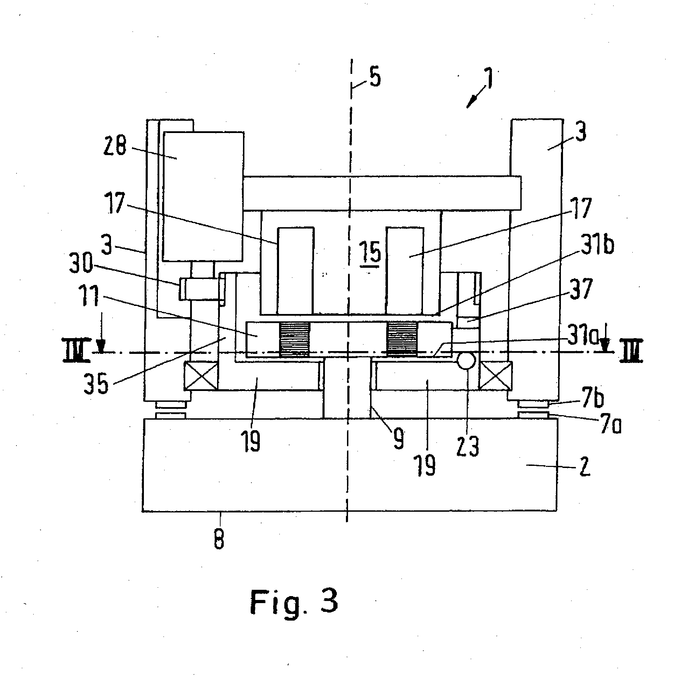

Der zweite Teil 3 ist im Wesentlichen, wie auch das erste Teil 2, rotationssymmetrisch um die Drehachse 5 ausgestaltet und angeordnet. Das zweite Teil 3 weist jedoch in seinem Innenraum Platz für weitere Teile des Drehgelenks auf. Ein Antriebsmotor 28 ist über eine Welle 29, die an ihrem unteren Ende ein Antriebsritzel 30 aufweist, mit einem ringförmigen Antriebselement 19 gekoppelt. Das Antriebselement 19 ist ebenfalls im Wesentlichen rotationssymmetrisch um die Drehachse 5 ausgestaltet und angeordnet und ist über ein Drehlager 25 relativ zu dem zweiten Teil 3 drehbar gelagert. Wenn der Antriebsmotor 28 das Ritzel 30 antreibt, treibt das Ritzel 30 über einen am Außenumfang des Antriebselements 19 ausgebildeten Zahnkranz das Antriebselement 19 an. Dabei befindet sich der Zahnkranz in Fig. 2 und Fig. 3 oben an dem im dargestellten Schnitt U-förmigen, in seinem Innenbereich hohlen oberen Bereich des Antriebselements 19.

Das erste Teil 2 ist über eine Welle 9, die rotationssymmetrisch ausgestaltet ist und koaxial zu der Drehachse 5 angeordnet ist, mit einem kreisscheibenförmigen Teil 11 verbunden, wobei sich die Welle 9 durch eine zylindrische Aussparung in dem Antriebselement 19 hindurcherstreckt und wobei das kreisscheibenförmige Teil 11 in dem Innenraum des oberen Bereichs 35 des Antriebselements 19 angeordnet ist. Das erste Teil 2, die fest damit verbundene Welle 9 und das ebenfalls fest mit der Welle 9 verbundene kreisscheibenförmige Teil 11 sind in der durch die Längsrichtung der Drehachse 5 definierten axialen Richtung axial beweglich. Diese axiale Bewegung wird durch einen Elektromagneten 17 erreicht, der auf magnetische Bereiche 13 in dem kreisscheibenförmigen Teil 11 wirkt. In dem in Fig. 2 dargestellten Zustand zieht der Elektromagnet 17 das Teil 11 an, so dass das Teil 11 an dem Bereich 15 anliegt, in dem der Elektromagnet 17 angeordnet ist. Daher besteht ein Luftspalt 31 a zwischen der in Fig. 2 unten dargestellten Oberfläche des Teils 11 und dem Antriebselement 19.

Dagegen befindet sich die Kombination der Teile 2, 9 und 11 in der in Fig. 3 dargestellten axialen Position in einem Abstand zu dem Bereich 15, so dass zwischen der Oberfläche des Teils 11 und dem Bereich 15 ein Luftspalt 31 b besteht. Der Luftspalt 31 a zwischen der unteren Oberfläche des Teils 11 und dem Antriebselement 19 hat sich verkleinert, ist aber nicht vollständig geschlossen. Allerdings ist eine Kopplung des Teils 11, die in dem Ausführungsbeispiel durch drei am Außenumfang des Teils 11 mit ihren Zylinderachsen radial nach außen weisende zylinderförmigen Teile 21 realisiert ist, in Eingriff mit korrespondierenden Kugelpaaren 23, die an dem Antriebselement 19 angeordnet sind. Dadurch wird eine Dreipunktlagerung erzielt.

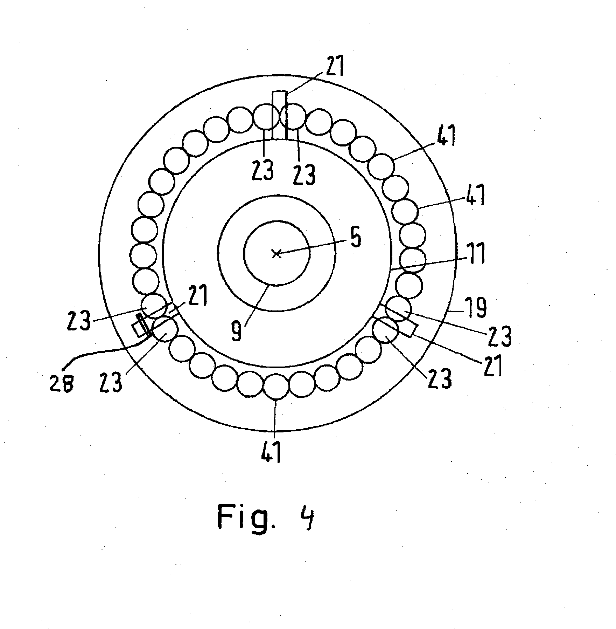

Diese Dreipunktlagerung ist aus Fig. 4 erkennbar. In dem Ausführungsbeispiel sind nicht nur für jeden der Zylinder 21 Kugelpaare vorgesehen, sondern ein durch eine Vielzahl von Kugeln 23, 41 gebildeter Ring. Dies bedeutet, dass die Zylinder 21 bei vielen verschiedenen Drehstellungen derart relativ zu den Kugeln 23 des Kugelringes positioniert werden können, dass sie jeweils zwei benachbarte Kugeln 23 in einem Punkt berühren. In Fig. 4 sind die Kugelpaare, welche in mechanischem Kontakt zu den Zylindern 21 sind, mit den Bezugszeichen 23 bezeichnet, während andere Kugeln des Rings mit dem Bezugszeichen 41 bezeichnet sind.

Auch die in Fig. 4 dargestellte Kopplung oder eine andere Dreipunktlagerung kann mit Hilfe eines magnetoresistiven Sensors hinsichtlich ihres Kopplungszustandes (insbesondere hinsichtlich des angekoppelten Zustandes und/oder des abgekoppelten Zustandes) überwacht werden. Hierzu wird beispielsweise, wie in Fig. 4 dargestellt, ein magnetoresistiver Sensor 28 am radial außenliegenden Bereich eines der Zylinder 21 befestigt. Der Sensor kann insbesondere einen Permanentmagneten aufweisen. Wenn der Zylinder 21 in der mit einem Kugelpaar 23 gekoppelten Stellung ist, verändern die Kugeln 23 das Magnetfeld des Magneten in einer charakteristischen Weise, so dass ein entsprechendes charakteristisches Sensorsignal von dem Sensor 28 erzeugt wird. Dieses z.B. vorbekannte Signal kann detektiert werden und daraus kann die Feststellung getroffen werden, dass der Zylinder 21 mit dem Kugelpaar 23 gekoppelt ist. Optional kann zumindest ein weiterer der insgesamt drei Zylinder 21 in der gleichen Weise mit einem magnetoresistiven Sensor versehen sein. Dies ermöglicht es festzustellen, dass nicht nur ein Zylinder 21, sonder zwei oder mehr Zylinder 21 mit einem Kugelpaar 23 in Kontakt sind.

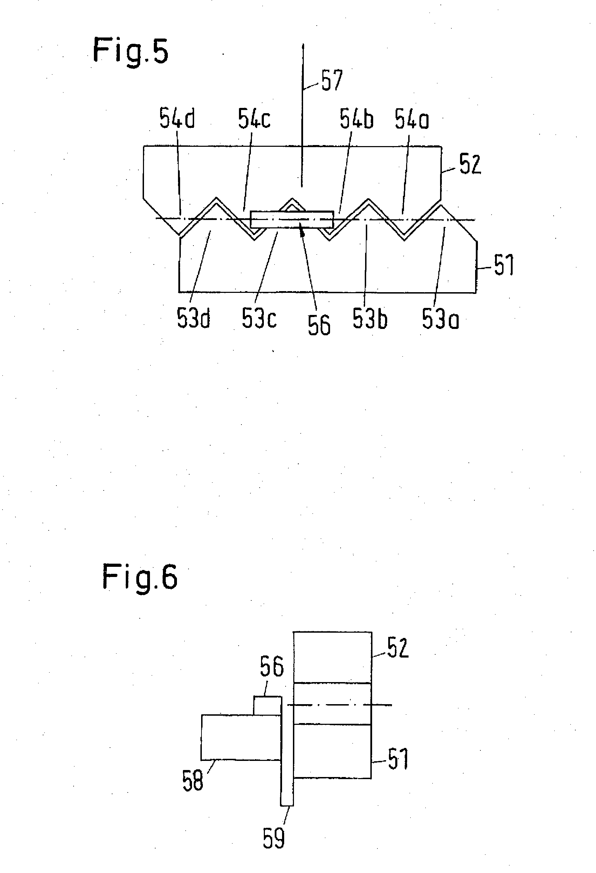

Fig. 5 zeigt in einer Seitenansicht einen Teil einer Verzahnung, wobei es sich z. B. um einen Teil einer Hirth-Verzahnung handeln kann. Unten in Fig. 5 ist ein erstes Teil 51 dargestellt, dessen vier dargestellte Zähne 53a, 53b, 53c, 53d mit ihren Spitzen nach oben weisen. Sie greifen in dem in Fig. 5 dargestellten gekoppelten Zustand in Vertiefungen bzw. Aussparungen zwischen vier Zähnen 54a, 54b, 54c, 54d ein, die von dem zweiten Teil 52 nach unten vorspringen. Dabei hat der Zahn 53a in der Darstellung von Fig. 5 lediglich an einer seiner beiden Flanken Kontakt mit dem Zahn 54a des zweiten Teils 52. Bei einer vollständigen Hirth-Verzahnung hätte der Zahn 53a außerdem mit seiner anderen Flanke Kontakt zu dem Nachbarzahn des Zahns 54a. Die Mittelebene, die bei gekoppelter Verzahnung nach oben und nach unten den gleichen Abstand zu den Zahnspitzen der Zähne 53 und zu den Zahnspitzen der Zähne 54 hat, ist durch eine strichpunktierte horizontale Linie in Fig. 5 und Fig. 6 dargestellt. Die axiale Richtung, in der zumindest eines der Teile 51, 52 beim Ankoppeln und Abkoppeln bewegt wird, ist in Fig. 5 durch eine vertikale Linie mit dem Bezugszeichen 57 dargestellt.

Auf der axialen Höhe der Mittelebene ist der magnetoresisitve Sensor 56 angeordnet. Die Positionierung des magnetoresistiven Sensors auf dieser axialen Höhe bzw. in dieser axialen Position hat sich als gut geeignet zur Detektion des angekoppelten Zustands erwiesen. Außerdem ist der magnetoresistive Sensor in dieser axialen Position auch dazu geeignet, die relative Drehstellung des ersten und zweiten Teils zu detektieren, wenn das erste und das zweite Teil nicht miteinander gekoppelt sind und wenn dabei der axiale Abstand der Teile nicht zu groß ist. Der Grund hierfür liegt darin, dass auch die Zähne des Teils, an dem der Sensor nicht befestigt ist, das von dem Sensor detektierte Magnetfeld beeinflussen.

Fig. 6 zeigt eine Seitenansicht der Anordnung aus Fig. 5, wobei der Sensor 56 mit einem Magneten 58 verbunden ist und wobei die Kombination aus dem Sensor 56 und dem Magneten 58, wie schematisch in Fig. 6 dargestellt ist, über eine Befestigung 59 mit dem ersten Teil 51 verbunden ist. Falls es sich bei der Verzahnung um eine Hirth-Verzahnung handelt, wird bevorzugt, dass die Kombination aus dem Sensor 56 und dem Magneten 58 innenseitig des Zahnkranzes angeordnet ist, d.h. zwischen dem Zahnkranz und der Drehachse. Dadurch wird der Sensor von dem Zahnkranz durch mögliche Beschädigungen und gegen Dejustierung geschützt. Allerdings kann der Sensor innenseitig nicht in genauso geringem Abstand zu dem Zahnkranz angeordnet werden wie außenseitig. Daher wird eine sehr kleine Bauform des Sensors bevorzugt, beispielsweise eines Sensors in Dünnschichttechnologie auf einer Platine oder ein integrierter Schaltkreis, um dennoch einen möglichst geringen Abstand zu dem Zahnkranz des ersten Teils zu ermöglichen. Insbesondere in Umfangsrichtung soll die Abmessung des Sensors gering sein, damit ein geringer Abstand zu dem Zahnkranz möglich ist.

Ferner ist in Fig. 6 dargestellt, dass der Magnet 58, der das Magnetfeld erzeugt, dessen Veränderung durch den Sensor 56 festgestellt wird, unterhalb des Sensors 56 angeordnet ist. Daher können sich die Magnetfeldlinien des Magneten 58 durch Einflüsse oberhalb des Sensors 56 verändern. Dort, oberhalb, befindet sich das zweite Teil, dessen axiale Position relativ zu dem ersten Teil veränderbar ist und dessen Drehposition relativ zu dem ersten Teil veränderbar ist. Wäre der Magnet, von dem Sensor aus gesehen, in derselben axialen Richtung angeordnet wie das andere Teil, mit dem der Sensor nicht fest verbunden ist, würde das Magnetfeld am Ort des Sensors kaum beeinflusst. Allgemeiner formuliert befinden sich der Magnet und das Teil, mit dem der Sensor nicht fest verbunden ist, in axialer Richtung vorzugsweise an gegenüberliegenden Seiten des Sensors.

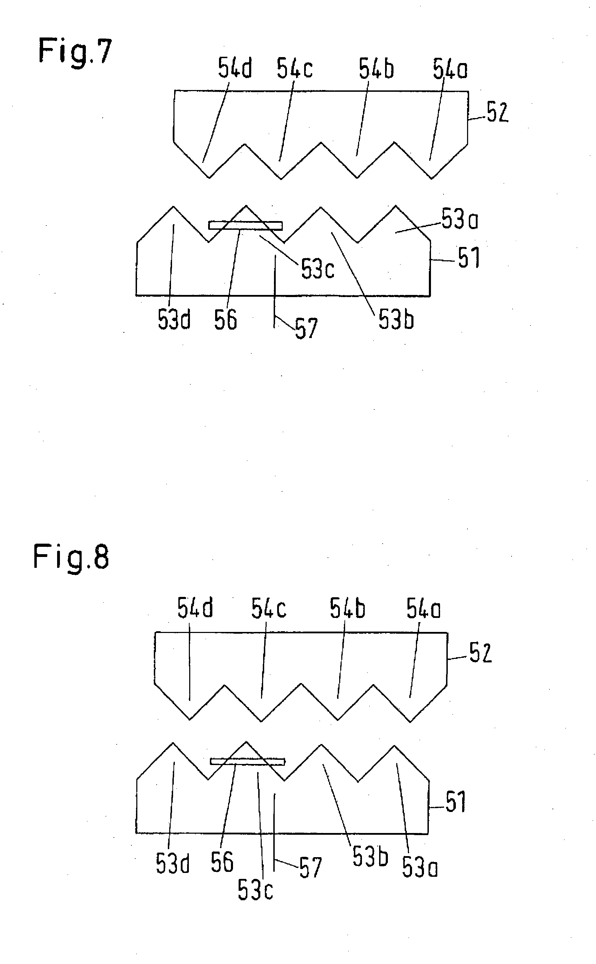

Fig. 7 zeigt dieselbe relative Drehstellung wie in Fig. 5, wobei sich "Drehstellung" auf den Fall einer Hirth-Verzahnung bezieht. Allgemeiner formuliert handelt es sich bei Fig. 7 um dieselbe laterale Relativposition, wobei "lateral" auf eine Richtung quer zur axialen Richtung 57 bezogen ist. Anders ausgedrückt wird die Drehstellung bzw. laterale Relativposition nicht durch eine Relativbewegung der Teile in axialer Richtung verändert.

In der in Fig. 7 dargestellten Situation befinden sich die Teile 51, 52 jedoch nicht in dem angekoppelten Zustand, der in Fig. 5 dargestellt ist, sondern in dem abgekoppelten Zustand. Befindet sich der Magnet (nicht in Fig. 7 dargestellt) wie in Fig. 6 dargestellt unterhalb des Sensors 56, werden die Magnetfeldlinien oberhalb des Sensors 56 nicht wie in dem Fall von Fig. 5 durch das Material des zweiten Teils 52 gebündelt, falls es sich um magnetisierbares Material handelt. Allgemeiner formuliert beeinflusst das nun in größerem Abstand zu dem Sensor 56 angeordnete Material des zweiten Teils 52 das Magnetfeld in anderer Weise als in der angekoppelten Stellung aus Fig. 5.

Fig. 8 zeigt die Teile 51, 52 in derselben axialen Position, d.h. bei demselben axialen Abstand zueinander. Allerdings ist die laterale Position gegenüber der Situation in Fig. 7 verändert. Die nach unten weisenden Zahnspitzen der Zähne 54 sind nicht mehr in derselben lateralen Position wie die Vertiefungen zwischen den Zähnen 53 des ersten Teils 51. Aus der in Fig. 8 dargestellten Relativposition der Teile 51, 52 kann die Ankopplung nicht mehr allein durch eine Relativbewegung in der axialen Richtung erreicht werden.

Diese veränderte laterale Position kann ebenfalls durch den Sensor 56 detektiert werden, der an dem ersten Teil 51 befestigt ist. Wenn sich der Magnet (nicht in Fig. 8 dargestellt) wiederum unterhalb des Sensors 56 befindet, wird das Magnetfeld am Ort des Sensors 56 in unterschiedlicher Weise beeinflusst, je nachdem ob sich (wie in Fig. 7 dargestellt) die Spitzen der Zähne 54c, 54d des zweiten Teils 52 über dem rechten und linken Rand des Sensors 56 befinden oder ob (wie in Fig. 8 dargestellt) lediglich noch die Spitze des Zahns 54c des zweiten Teils 52 unmittelbar über dem Sensor 56 positioniert ist.

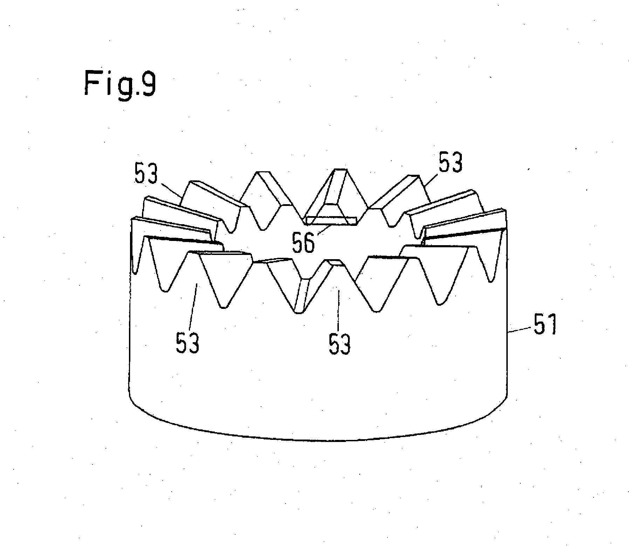

Fig. 9 zeigt einen Zahnkranz einer Hirth-Verzahnung. In Analogie zu den in Fig. 5 bis 8 verwendeten Bezeichnungen sind die Zähne mit dem Bezugszeichen 53 bezeichnet. Insgesamt weist der Zahnkranz fünfzehn Zähne auf, von denen aber lediglich vier mit dem Bezugszeichen 53 bezeichnet sind. Wie die Darstellung zeigt, müssen die Zahnspitzen nicht wie in Fig. 5, 7 und 8 dargestellt scharfkantig sein, sondern können auch abgeflacht sein. Der Sensor 56 ist innenseitig des Zahnkranzes an einem der Zähne 53 positioniert.

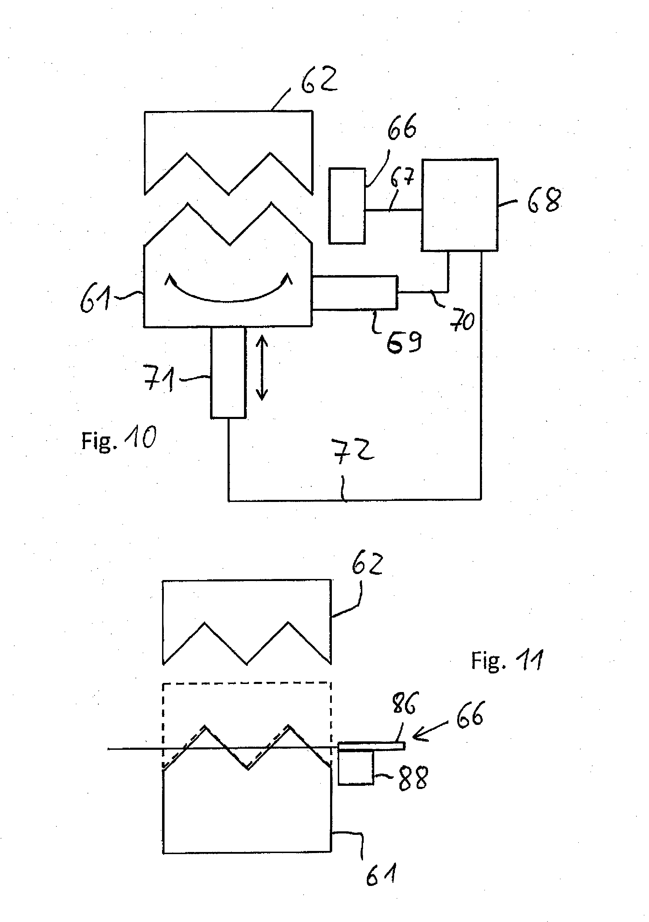

Fig. 10 zeigt schematisch zwei miteinander koppelbare Teile 61, 62. Anstelle der schematisch angedeuteten Verzahnung kann die Kopplung mechanisch auch anders ausgestaltet sein, z.B. in der in Fig. 4 dargestellten Weise. Relativ zu dem ersten Teil 61 fest positioniert ist ein magnetoresistiver Sensor 66 angeordnet, der über eine Signalleitung 67 mit einer Auswertungs- und Steuereinrichtung 68 verbunden ist. Sensorsignale des Sensors 66 werden über die Signalleitung 67 zu der Einrichtung 68 übertragen. Ferner ist die Einrichtung 68 über eine Steuerleitung 70 mit einem ersten Aktor 69 (z.B. einem Elektromotor) verbunden, der eine Drehbewegung des ersten Teils 61 antreiben kann, mit der die relative Drehstellung der Teile 61, 62 zueinander verändert wird. Außerdem ist die Einrichtung 68 über eine zweite Steuerleitung 72 mit einem zweiten Aktor 71 verbunden, der eine axiale Bewegung, d.h. eine Bewegung in der axialen Richtung, des ersten Teils 61 bewirken kann.

Wie das spezielle Ausführungsbeispiel der Fig. 11 zeigt, kann der Sensor 66 eine Platine 86 und einen Magneten 88 aufweisen. Auf der Platine 86 ist die elektrische Schaltung aufgebracht, die zumindest einen Widerstand aufweist, dessen Widerstandswert durch das am Ort des Widerstandes herrschende Magnetfeld bestimmt wird. Wie durch eine horizontale Linie angedeutet ist, ist die Platine 86 wiederum auf Höhe der Mittelebene angeordnet, die bei hergestellter Kopplung der Teile 61, 62 definiert ist. Der gekoppelte Zustand ist durch das erste Teil 61 und das zweite Teil 62 in der gestrichelten Darstellung dargestellt.

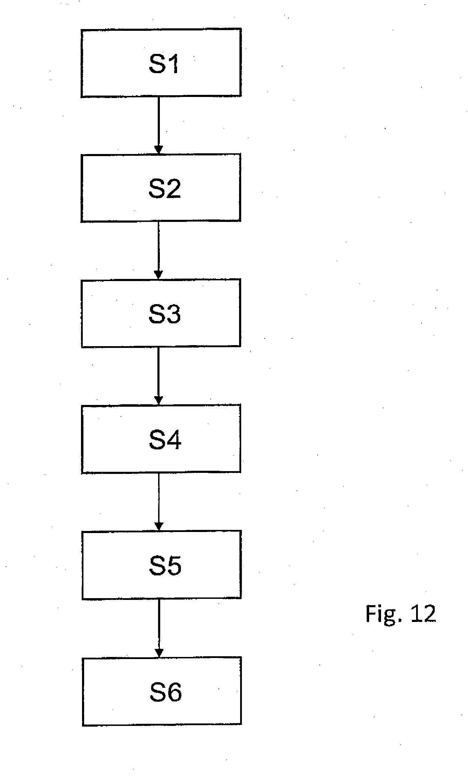

Im Folgenden wird nun ein bevorzugtes Ausführungsbeispiel des erfindungsgemäßen Verfahrens anhand des Flussdiagramms in Fig. 12 beschrieben. Dabei wird auch auf die schematische Darstellung der Fig. 10 Bezug genommen. In Schritt S1 wird das kontinuierlich von dem Sensor 66 über die Sensorleitung 67 an die Auswertungs- und Steuereinrichtung 68 ausgegebene Sensorsignal zum ersten Mal durch die Einrichtung 68 ausgewertet. Die Einrichtung 68 verfügt über Informationen darüber, welche empfangenen Sensorsignale welcher Relativposition der Teile 61, 62 entsprechen. Z.B. ist das Sensorsignal lediglich abhängig von der Magnetfeldstärke am Ort des magnetfeldabhängigen Widerstandes des Sensors 66. Dabei herrscht am Ort des Sensors z.B. im Fall der hergestellten Kopplung (Fig. 5) die größte Magnetfeldstärke. Im Fall der Fig. 7 herrscht eine kleinere Magnetfeldstärke und ebenfalls herrscht im Fall der Fig. 8 eine kleinere Magnetfeldstärke als im Fall der Fig. 5. Andererseits können auch die verschiedenen lateralen Positionen aus Fig. 7 und Fig. 8 durch unterschiedliche Magnetfeldstärken und daraus resultierende unterschiedliche Sensorsignale des Sensors 66 unterschieden werden. Z.B. ist die Magnetfeldstärke in dem Fall der Fig. 8 größer als in dem Fall der Fig. 7. Die Zuordnung der Sensorsignale zu den möglichen Relativpositionen ist z.B. in der Art einer Tabelle gespeichert, bei der die Sensorsignale in einer ersten Spalte und die zugeordneten Relativpositionen in einer zweiten Spalte der Tabelle aufgetragen sind.

Das in Schritt S1 ausgewertete Sensorsignal bedeutet, dass sich das erste Teil 6.1 und das zweite Teil 62 in dem abgekoppelten Zustand befinden, in dem aber eine Kopplung allein durch eine Bewegung in axialer Richtung möglich ist. Z.B. über nicht in Fig. 10 dargestellte Eingabemittel hat die Einrichtung 68 die Anweisung erhalten, das erste Teil 61 in eine um zwei Zahnperioden veränderte Drehstellung relativ zu dem zweiten Teil 62 zu bringen und dann die Teile 61, 62 wieder miteinander zu koppeln. In Schritt S2 steuert die Einrichtung 68 daher über die erste Steuerleitung 70 den ersten Aktor 69 derart an, dass dieser eine Drehbewegung des ersten Teils 61 bewirkt. Während der Drehbewegung wertet die Einrichtung 68 laufend die von dem Sensor 66 empfangenen Sensorsignale aus (Schritt S3). Dabei stellt die Einrichtung 68 zunächst fest, dass nach einer Drehbewegung um eine Zahnperiode wieder dasselbe Sensorsignal von dem Sensor 66 empfangen wird. Mit weiter fortschreitender Drehbewegung wird nach einer weiteren Drehung um eine Zahnperiode von der Einrichtung 68 festgestellt, dass wieder dasselbe Sensorsignal wie vor Beginn der Drehbewegung von dem Sensor 66 empfangen wird.

In dem folgenden Schritt S4 stoppt die Einrichtung 68 durch ein entsprechendes StoppSignal über die Signalleitung 70 die von dem Aktor 69 bewirkte Drehbewegung. In dem nun folgenden Schritt S5 steuert die Einrichtung 68 über die zweite Signalleitung 72 eine axiale Bewegung des ersten Teils 61 an, die von dem zweiten Aktor 71 bewirkt wird. Dadurch wird die Kopplung der Teile 61, 62 hergestellt. Die hergestellte Kopplung detektiert die Einrichtung 68 im Schritt S6 dadurch, dass ein der hergestellten Kopplung entsprechendes Sensorsignal des Sensors 66 erkannt wird. Entweder stoppt der Aktor 71 die axiale Bewegung selbsttätig aufgrund des durch die Kopplung hergestellten mechanischen Widerstandes. Alternativ stoppt die Einrichtung 68 die axiale Bewegung in einem weiteren Schritt durch ein entsprechendes Steuersignal, das sie über die zweite Signalleitung 72 an den zweiten Aktor 71 ausgibt.

Die in den Figuren dargestellten Kopplungseinrichtungen sind lediglich Beispiele, die bei anderen Ausführungsformen der Erfindung modifiziert werden können. Insbesondere kann das in Fig. 2 und Fig. 3 dargestellte Drehgelenk hinsichtlich der Antriebe, mit denen zu koppelnde Teile bewegt werden, verändert werden. Für die Drehbewegung eines zu koppelnden Teils wird vorzugsweise ein Elektromotor eingesetzt. Anders als in Fig. 2 oder Fig. 3 dargestellt, kann dieser Elektromotor aber z. B. unmittelbar eine Welle antreiben, die mit dem zu drehenden Teil fest verbunden ist und deren Längsachse mit der Drehachse zusammenfällt. Es sind jedoch auch andere Antriebe möglich, z. B. Antriebe mit Elektromagneten und optional zusätzlich elastisch verformbaren Teilen, z. B. einer Spiralfeder.

Bei dem Antrieb für die Bewegung in der axialen Richtung kann z. B. auf die Elektromagneten verzichtet werden und stattdessen ein oder mehrere Motoren eingesetzt werden, z. B. ein Linearmotor oder ein konventioneller Motor, dessen AntriebsDrehmoment durch ein Getriebe in eine Linearbewegung gewandelt wird.

Auch ist es möglich, die axiale Bewegung pneumatisch zu bewirken, z. B. über die pneumatisch betätigte Bewegung eines Kolbens. Alternativ ist auch eine hydraulisch betätigte axiale Bewegung möglich. Ferner können auch bei der axialen Bewegung elastisch verformbare Teile zum Einsatz kommen, z. B. Federn, die in bestimmten Betriebszuständen vorgespannt sind und daher eine von den elastischen Teilen angetriebene Bewegung ausgelöst werden kann. Z. B. können die pneumatisch oder hydraulisch angetriebenen Teile gegen die elastischen Kräfte wirken, sodass die entsprechenden elastisch verformbaren Teile vorgespannt werden und nach entsprechender Auslösung die Gegenbewegung bewirken können, bei der dann von der pneumatischen oder hydraulischen Einrichtung keine Antriebskraft erforderlich ist.

Ferner ist es möglich, einen der Kopplungszustände, z. B. den angekoppelten Zustand, durch vorgespannte elastisch verformbare Teile gegen eine Veränderung des Zustandes zu sichern. Dieser gesicherte Zustand kann dann durch geeignete Antriebskräfte (z. B. von einem Elektromotor, einer pneumatischen Einrichtung oder einer hydraulischen Einrichtung) verändert werden, d. h. das entsprechende Teil aus dem Zustand herausbewegt werden. Z. B. wird der angekoppelte Zustand durch vorgespannte Federn gehalten und kann der hydraulisch betätigte Kolben eines der angekoppelten Teile durch axiale Bewegung von dem anderen Teil entfernen und so den abgekoppelten Zustand herstellen.

Insbesondere wenn für verschiedene Kopplungszustände (z. B. für einen angekoppelten Zustand und einen abgekoppelten Zustand) jeweils ein Anschlag vorgesehen ist, an dem das bewegliche, zu koppelnde Teil anstößt, während es sich in dem Zustand befindet, ist es nicht erforderlich, durch Auswertung der Sensorsignale über einen Zeitraum während der Bewegung des Teils die Bewegung mitzuverfolgen. In diesem Fall reicht es aus, jeweils durch das Sensorsignal festzustellen, dass sich das Teil in dem Zustand befindet, in dem es an dem Anschlag anstößt. Entsprechendes gilt für die in Fig. 10 dargestellten Aktoren.

## Patentansprüche

1. Verfahren zum Ermitteln eines angekoppelten Zustandes und/oder eines abgekoppelten Zustandes eines ankoppelbaren Teils (2; 52; 62) einer Maschine (41), insbesondere eines Koordinatenmessgerätes oder einer Werkzeugmaschine, wobei das ankoppelbare Teil (2; 52; 62) zur Herstellung des angekoppelten Zustandes in einer axialen Richtung (57) auf einen Kontaktbereich (7; 53) der Maschine (41) zu bewegbar ist und zur Herstellung des abgekoppelten Zustandes in der axialen Richtung (57) von dem Kontaktbereich (7; 53) weg bewegbar ist, wobei ein magnetoresistiver Sensor (56) dazu verwendet wird, ein Sensorsignal zu erzeugen, das von einer axialen Position des ankoppelbaren Teils (2; 52; 62) abhängig ist, das erzeugte Sensorsignal ausgewertet wird und daraus ermittelt wird, ob das ankoppelbare Teil (2; 52; 62) an dem Kontaktbereich (7; 53) der Maschine (41) angekoppelt ist und/oder ob das ankoppelbare Teil (2; 52; 62) von dem Kontaktbereich (7; 53) abgekoppelt ist,
wobei das ankoppelbare Teil (2; 52; 62) ein erstes Teil ist und der Kontaktbereich (7: 53) von einem zweiten Teil (3: 51; 61) gebitdet wird, wobei in dem angekoppelten Zustand zumindest ein in der axialen Richtung (57) vorspringender Bereich (7a, 7b; 53, 54) des ersten (2; 52; 62) und/oder zweiten (3; 51; 61) Teils in eine entsprechende Aufnahme des anderen Teils eingreift,
wobei das erste (2; 52; 62) und das zweite (3; 51; 61) Teil relativ zueinander um die axiale Richtung (57) drehbar sind und der zumindest eine vorspringende Bereich (7a, 7b; 53, 54) in verschiedenen Drehstellungen jeweils in eine entsprechende Aufnahme des anderen Teils eingreifen kann, sodass das erste Teil (2; 52; 62) bei den verschiedenen Drehstellungen an das zweite Teil (3; 51; 61) ankoppelbar ist, wobei der magnetoresistive Sensor (56) auch dazu verwendet wird, ein Sensorsignal zu erzeugen, das von der relativen Drehstellung des ersten (2; 52; 62) und zweiten (3; 51; 61) Teils abhängig ist, wobei das erzeugte Sensorsignal ausgewertet wird und daraus Informationen über die Drehstellung gewonnen werden.

2. Verfahren nach dem vorhergehenden Anspruch, wobei durch Auswertung des erzeugten Sensorsignals ermittelt wird, ob sich das erste (2; 52; 62) und das zweite (3; 51; 61) Teil relativ zueinander in einer vorgegebenen Drehstellung befinden, die es erlaubt, durch Bewegung in der axialen Richtung (57) das erste Teil (2; 52; 62) an das zweite Teil (3; 51; 61) anzukoppeln.

3. Verfahren nach einem der vorhergehenden Ansprüche, wobei von dem Sensor (56) während einer Relativbewegung des ankoppelbaren Teils (2; 52; 62) und des Kontaktbereichs wiederholt Sensorsignale erzeugt werden und wobei die momentane relative Position des ankoppelbaren Teils (2; 52; 62) und des Kontaktbereichs (7; 53) durch Auswertung des zeitlichen Verlaufs der von dem Sensor (56) erzeugten Sensorsignale ermittelt wird.

4. Anordnung zum Ermitteln eines angekoppelten Zustandes und/oder eines abgekoppelten Zustandes eines ankoppelbaren Teils (2; 52; 62) einer Maschine (41), insbesondere eines Koardinatenmessgerätes oder einer Werkzeugmaschine, wobei die Anordnung das ankoppelbare, erste Teil und ein zweites Teil (3; 51; 61) aufweist, wobei das zweite Teil (3; 51; 61) einen Kontaktbereich (7; 53) der Maschine (41) zum Ankoppeln des ersten Teils (3; 51; 61) aufweist, wobei das ankoppelbare Teil (2; 52; 62) zur Herstellung des angekoppelten Zustandes in einer axialen Richtung (57) auf den Kontaktbereich (7; 53) zu bewegbar ist und zur Herstellung des abgekoppelten Zustandes in der axialen Richtung (57) von dem Kontaktbereich (7; 53) weg bewegbar Ist, wobei die Anordnung einen magnetoreslstiver Sensor (56) aufweist, der derart ausgestaltet und positioniert ist, dass er ein Sensorsignal erzeugt, das von einer axialen Position des ersten Teils (2; 52; 62) abhängig ist, wobei die Anordnung eine Auswertungseinrichtung (68) aufweist, die ausgestaltet ist, das erzeugte Sensorsignal auszuwerten und daraus zu ermitteln, ob das ankoppelbare Teil (2; 52; 62) an dem Kontaktbereich (7; 53) der Maschine (41) angekoppelt ist und/oder ob das ankoppelbare Teil (2; 52; 62) von dem Kontaktbereich (7; 53) beabstandet Ist,
wobei in dem angekoppelten Zustand zumindest ein in der axialen Richtung (57) vorspringender Bereich (7a, 7b; 53, 54) des ersten (2; 52; 62) und/oder zweiten (3; 51; 61) Teils in eine entsprechende Aufnahme des anderen Teils eingreift, wobei das erste (2; 52; 62) und das zweite (3; 51; 61) Teil relativ zueinander um die axiale Richtung (57) drehbar sind und der zumindest eine vorspringende Bereich (7a, 7b; 53, 54) in verschiedenen Drehstellungen jeweils in eine entsprechende Aufnahme des anderen Teils eingreifen kann, sodass das erste Teil (2; 52; 62) bei den verschiedenen Drehstellungen an das zweite Teil (3; 51; 61) ankoppelbar ist, wobei der magnetoresistive Sensor (56) derart ausgestaltet und positioniert ist, dass er ein Sensorsignal erzeugt, das von der relativen Drehstellung des ersten und zweiten Teils (3; 51; 61) abhängig ist, wobei die Auswertungseinrichtung (68) ausgestaltet ist, das erzeugte Sensorsignal auszuwerten und daraus Informationen über die Drehstellung zu gewinnen.

5. Anordnung nach dem vorhergehenden Anspruch, wobei die Anordnung eine Steuereinrichtung (68) zum Steuern der axialen Bewegung des ersten Teils (2; 52; 62) aufweist, wobei die Steuereinrichtung (68) mit der Auswertungseinrichtung verbunden ist oder in die Auswertungseinrichtung (68) integriert ist und wobei die Anordnung ausgestaltet ist, das erste Teil (2; 52; 62) durch axiale Bewegung an das zweite Teil (3; 51; 61) anzukoppeln, wenn die Auswertungseinrichtung (68) durch Auswertung des erzeugten Sensorsignals ermittelt hat, dass sich das erste (2; 52; 62) und das zweite (3; 51; 61) Teil relativ zueinander in einer vorgegebenen Drehstellung befinden, die es erlaubt, durch Bewegung in der axialen Richtung (57) das erste Teil (2; 52; 62) an das zweite Teil (3; 51; 61) anzukoppeln.

6. Anordnung nach Anspruch 4 oder 5, wobei die Auswertungseinrichtung (68) mit einer Steuereinrichtung (68) gekoppelt ist, die ausgestaltet ist, eine Relativbewegung des ersten und zweiten Teils (3; 51; 61) zu steuern, wobei die Auswertungseinrichtung (68) Ermittlungsergebnisse durch Auswertung des Sensorsignals ermittelt und wobei die Steuereinrichtung (68) die Relativbewegung abhängig von den Ermittlungsergebnissen der Auswertungseinrichtung (68) steuert.

7. Koordinatenmessgerät, aufweisend die Anordnung nach einem der Ansprüche 4 bis 6.

## Claims

1. A method for determining a coupled state and/or a decoupled state of a couplable part (2; 52; 62) of a machine (41), in particular of a coordinate measuring device or of a machine tool,
wherein the couplable part (2; 52; 62) is movable in an axial direction (57) to a contact region (7; 53) of the machine (41) in order to establish the coupled state and is movable away from the contact region (7; 53) in the axial direction (57) in order to establish the decoupled state,
wherein a magnetoresistive sensor (56) is used to generate a sensor signal, which is dependent on an axial position of the couplable part (2; 52; 62), the generated sensor signal is evaluated and it is determined therefrom whether the couplable part (2; 52; 62) is coupled to the contact region (7; 53) of the machine (41) and/or whether the couplable part (2; 52; 62) is decoupled from the contact region (7; 53);
wherein the couplable part (2; 52; 62) is a first part and the contact region (7; 53) is formed by a second part (3; 51; 61), wherein in the coupled state at least one projection region (7a, 7b; 53, 54) of the first (2; 52; 62) and/or second (3, 51; 61) part, which is projecting in the axial direction (57), engages in a corresponding reception of the other part;
wherein the first (2; 52; 62) and the second (3; 51; 61) part are rotatable relative to each other about the axial direction (57) and the at least one projecting region (7a, 7b; 53, 54) can engage in different rotational positions in each case in a corresponding reception of the other part, so that the first part (2; 52; 62) is couplable to the second part (3; 51; 61) at the different rotational positions, wherein the magnetoresistive sensor (56) is also used to generate a sensor signal, which is dependent on the relative rotational position of the first (2; 52; 62) and second part (3; 51; 61), wherein the generated sensor signal is evaluated and information about the rotational position is obtained therefrom.

2. The method according to the preceding claim, wherein it is determined by evaluating the generated sensor signal whether the first part (2; 52; 62) and the second (3; 51; 61) part are relative to each other in a predefined rotational position that allows the first part (2; 52; 62) to be coupled to the second part (3; 51; 61) by movement in the axial direction (57).

3. The method according to one of preceding claims, wherein sensor signals are repeatedly generated by the sensor (56) during a relative movement of the couplable part (2; 52; 62) and the contact region and wherein the current relative position of the couplable part (2; 52; 62) and the contact region (7; 53) is determined by evaluating the time profile of the sensor signals generated by the sensor (56).

4. An arrangement for determining of a coupled state and/or of a decoupled state of a couplable part (2; 52; 62) of a machine (41), in particular of a coordinate measuring device or of a machine tool,
wherein the arrangement comprises the couplable, first part and a second part (3; 51; 61), wherein the second part (3; 51; 61) comprises a contact region (7; 53) of the machine (41) for coupling the first part (3; 51; 61), wherein the couplable part (2; 52; 62) is movable to the contact region (7; 53) in an axial direction (57) in order to establish the coupled state and is movable away from the contact region (7; 53) in the axial direction (57) in order to establish the decoupled state, wherein the arrangement comprises a magnetoresistive sensor (56), which is configured and positioned so that it generates a sensor signal that is dependent on an axial position of the first part (2; 52; 62), wherein the arrangement comprises an evaluation device (68) configured to evaluate the generated sensor signal and to determine therefrom whether the couplable part (2; 52; 62) is coupled to the contact region (7; 53) of the machine (41) and/or whether the couplable part (2; 52; 62) is spaced apart from the contact region (7; 53),
wherein in the coupled state at least one projection region (7a, 7b; 53, 54) of the first (2; 52; 62) and/or second (3; 51; 61) part, which projects in the axial direction (57), engages in a corresponding reception of the other part,
wherein the first (2; 52; 62) and the second (3; 51; 61) part are rotatable relative to another about the axial direction (57) and the at least one projecting region (7a, 7b; 53, 54) can engage in different rotational positions in each case in a corresponding reception of the other part, so that the first part (2; 52; 62) is couplable to the second part (3; 51; 61) at the different rotational positions, wherein the magnetoresistive sensor (56) is configured and positioned so that it generates a sensor signal that is dependent on the relative rotational position of the first and second part (3; 51; 61), wherein the evaluation device (68) is configured to evaluate the generated sensor signal and to obtain therefrom information about the rotational position.

5. The arrangement according to the preceding claim, wherein the arrangement comprises a control device (68) for controlling the axial movement of the first part (2; 52; 62), wherein the control device (68) is connected to, or integrated in, the evaluation device (68) and wherein the arrangement is configured to couple the first part (2; 52; 62) to the second part (3; 51; 61) by axial movement, if the evaluation device (68), by evaluating the generated sensor signal, has determined that the first part (2; 52; 62) and the second (3; 51; 61) part are relative to one another in a predefined rotational position which allows the first part (2; 52; 62) to be coupled to the second part (3; 51; 61) by movement in the axial direction (57).

6. The arrangement according to claim 4 or 5, wherein the evaluation device (68) is connected to a control device (68), wherein the control device (68) is configured to control a relative movement of the first and second part (3; 51; 61), wherein the evaluation device (68) determines determination results by evaluating the sensor signal and wherein the control device (68) controls the relative movement dependent on the determination results of the evaluation device (68).

7. A coordinate measuring device comprising the arrangement according to one of the claims 4 to 6.

## Revendications

1. Procédé de détermination d'un état couplé et/ou d'un état découplé d'une partie pouvant être couplée (2 ; 52 ; 62) d'une machine (41), en particulier d'un appareil de mesure de coordonnées ou d'une machine-outil, la partie pouvant être couplée (2 ; 52 ; 62) étant mobile pour la réalisation de l'état couplé dans une direction axiale (57) vers une zone de contact (7 ; 53) de la machine (41) et pour la réalisation de l'état découplé dans la direction axiale (57) en éloignement de la zone de contact (7 ; 53), un capteur (56) magnétorésistif étant utilisé afin de générer un signal de capteur qui dépend d'une position axiale de la partie pouvant être couplée (2 ; 52 ; 62), le signal de capteur généré étant évalué et étant déterminé à partir de celui-ci si la partie pouvant être couplée (2 ; 52 ; 62) est couplée à la zone de contact (7 ; 53) de la machine (41) et/ou si la partie pouvant être couplée (2 ; 52 ; 62) est découplée de la zone de contact (7 ; 53),
la partie pouvant être couplée (2 ; 52 ; 62) étant une première partie et la zone de contact (7 ; 53) étant formée par une seconde partie (3 ; 51 ; 61), dans l'état couplé au moins une zone (7a, 7b ; 53, 54), en saillie dans la direction axiale (57), de la première (2 ; 52 ; 62) et/ou la seconde (3 ; 51 ; 61) partie s'engageant dans un logement correspondant de l'autre partie,
la première (2 ; 52 ; 62) et la seconde (3 ; 51 ; 61) partie étant rotatives l'une par rapport à l'autre autour de la direction axiale (57) et l'au moins une zone (7a, 7b ; 53, 54) en saillie pouvant s'engager dans différentes positions de rotation respectivement dans un logement correspondant de l'autre partie de sorte que la première partie (2 ; 52 ; 62) puisse être couplée pour les différentes positions de rotation à la seconde partie (3 ; 51 ; 61), le capteur magnétorésistif (56) étant aussi utilisé afin de générer un signal de capteur qui dépend de la position de rotation relative de la première (2 ; 52 ; 62) et seconde (3 ; 51 ; 61) partie, le signal de capteur généré étant évalué et des informations sur la position de rotation étant obtenues à partir de celui-ci.

2. Procédé selon la revendication précédente, étant déterminé par l'évaluation du signal de capteur généré si la première (2 ; 52 ; 62) et la seconde (3 ; 51 ; 61) partie se trouvent l'une par rapport à l'autre dans une position de rotation prescrite qui permet de coupler par mouvement dans la direction axiale (57) la première partie (2 ; 52 ; 62) à la seconde partie (3 ; 51 ; 61).

3. Procédé selon l'une quelconque des revendications précédentes, des signaux de capteur étant générés de manière répétée par le capteur (56) pendant un mouvement relatif de la partie pouvant être couplée (2 ; 52 ; 62) et de la zone de contact et la position relative momentanée de la partie pouvant être couplée (2 ; 52 ; 62) et de la zone de contact (7 ; 53) étant déterminée par l'évaluation de l'allure temporelle des signaux de capteur générés par le capteur (56).

4. Agencement pour la détermination d'un état couplé et/ou d'un état découplé d'une partie pouvant être couplée (2 ; 52 ; 62) d'une machine (41), en particulier d'un appareil de mesure de coordonnées ou d'une machine-outil, l'agencement présentant la première partie pouvant être couplée et une seconde partie (3 ; 51 ; 61), la seconde partie (3 ; 51 ; 61) présentant une zone de contact (7 ; 53) de la machine (41) pour le couplage de la première partie (3 ; 51 ; 61), la partie pouvant être couplée (2 ; 52 ; 62) étant mobile pour la réalisation de l'état couplé dans une direction axiale (57) vers la zone de contact (7 ; 53) et pour la réalisation de l'état découplé dans la direction axiale (57) en éloignement de la zone de contact (7 ; 53), l'agencement présentant un capteur magnétorésistif (56) qui est configuré et positionné de telle manière qu'il génère un signal de capteur qui dépend d'une position axiale de la première partie (2 ; 52 ; 62), l'agencement présentant un dispositif d'évaluation (68) qui est configuré afin d'évaluer le signal de capteur généré et de déterminer à partir de celui-ci si la partie pouvant être couplée (2 ; 52 ; 62) est couplée à la zone de contact (7 ; 53) de la machine (41) et/ou si la partie pouvant être couplée (2 ; 52 ; 62) est espacée de la zone de contact (7 ; 53), dans l'état couplé au moins une zone (7a, 7b ; 53, 54), en saillie dans la direction axiale (57), de la première (2 ; 52 ; 62) et/ou seconde (3 ; 51 ; 61) partie s'engageant dans un logement correspondant de l'autre partie, la première (2 ; 52 ; 62) et la seconde (3 ; 51 ; 61) partie étant rotatives l'une par rapport à l'autre autour de la direction axiale (57) et l'au moins une zone (7a, 7b ; 53, 54) en saillie pouvant s'engager dans différentes positions de rotation respectivement dans un logement correspondant de l'autre partie de sorte que la première partie (2 ; 52 ; 62) puisse être couplée pour les différentes positions de rotation à la seconde partie (3 ; 51 ; 61), le capteur magnétorésistif (56) étant configuré et positionné de telle manière qu'il génère un signal de capteur qui dépend de la position de rotation relative de la première et seconde partie (3 ; 51 ; 61), le dispositif d'évaluation (68) étant configuré afin d'évaluer le signal de capteur généré et d'obtenir à partir de celui-ci des informations sur la position de rotation.

5. Agencement selon la revendication précédente, l'agencement présentant un dispositif de commande (68) pour la commande du mouvement axial de la première partie (2 ; 52 ; 62), le dispositif de commande (68) étant relié au dispositif d'évaluation ou étant intégré dans le dispositif d'évaluation (68) et l'agencement étant configuré afin de coupler la première partie (2 ; 52 ; 62) par mouvement axial à la seconde partie (3 ; 51 ; 61) si le dispositif d'évaluation (68) a déterminé par évaluation du signal de capteur généré que la première (2 ; 52 ; 62) et la seconde (3 ; 51 ; 61) partie se trouvent l'une par rapport à l'autre dans une position de rotation prescrite qui permet de coupler la première partie (2 ; 52 ; 62) à la seconde partie (3 ; 51 ; 61) par mouvement dans la direction axiale (57).

6. Agencement selon la revendication 4 ou 5, le dispositif d'évaluation (68) étant couplé à un dispositif de commande (68) qui est configuré afin de commander un mouvement relatif de la première et seconde partie (3 ; 51 ; 61), le dispositif d'évaluation (68) déterminant des résultats de détermination par évaluation du signal de capteur et le dispositif de commande (68) commandant le mouvement relatif selon les résultats de détermination du dispositif d'évaluation (68).

7. Appareil de mesure de coordonnées, présentant l'agencement selon l'une quelconque des revendications 4 à 6.
